# EUROPEAN PATENT APPLICATION

(11) **EP 4 732 921 A1**
(43) Date of publication of application: **29.04.2026**
(21) Application number: 25209345.5
(22) Date of filing: 17.10.2025
(51) Int. Cl.: A63F 13/24, A63F 13/54

(54) **CONTROLLER**

(30) Priority: 23.10.2024 JP 2024186368
(71) Applicant: Alps Alpine Co., Ltd., Ota-ku, Tokyo 145-8501 (JP)
(72) Inventor: Ito, Ryo, Iwaki-city Fukushima (JP)
(74) Representative: Schmitt-Nilson Schraud Waibel Wohlfrom Patentanwälte Partnerschaft mbB

(57) **Abstract**

A controller includes a casing provided with an upper surface, a lower surface, and side surfaces, and configured to be held by a hand; and an operation part that is provided at least on the upper surface of the casing. A main sounding part is provided on the upper surface of the casing, a sub sounding part is provided on at least either of the side surfaces or the lower surface of the casing, and an angle formed by a sound emission centerline of the main sounding part and the sound emission centerline of the sub sounding part is 90 degrees or more.

## Description

The present disclosure relates to a controller which is held by a hand to operate a video game or virtual reality (VR).

JP 2004-128669 A discloses a controller for a game which is used by holding by a hand. This controller for a game is provided with a compact loudspeaker unit configured to reproduce three-dimensional sound, the unit including two compact loudspeakers. In paragraph [0032], as an acoustic effect of the compact loudspeaker units for reproducing three-dimensional sound, there is stated "By electrically synthesizing a head-related transfer function corresponding to a desired angle and distance in a three-dimensional space, processing for arranging a virtual sound source at a desired position in the space, that is, for adding sound localization, is combined".

A controller device described in JP 2011-156441 A is provided with a woofer loudspeaker and a tweeter loudspeaker as well as various buttons. According to paragraph [0044] and the following, an analog circuit provided in accordance with the woofer loudspeaker includes a first filter for removing frequency components exceeding a predetermined cutoff frequency, and a first amplifier for amplifying a signal that passed through the first filter and outputting the amplified signal to the woofer loudspeaker. An analog circuit provided in accordance with the tweeter loudspeaker includes a second filter for passing therethrough at least a predetermined frequency band, and a second amplifier for amplifying a signal that passed through the second filter and outputting the amplified signal to the tweeter loudspeaker.

A controller disclosed in JP 2023-514961 A includes a left loudspeaker provided adjacent to a left handle held by a user's left hand, and a right loudspeaker provided adjacent to a right handle held by the user's right hand. When the user touches the left loudspeaker and the right loudspeaker, the audio characteristics of audio contents output by the left and right loudspeakers can be controlled. For example, by touching the left loudspeaker or the right loudspeaker with a finger, a specific audio characteristic can be disabled, enabled, or adjusted.

The present disclosure relates to a controller according to the appended claims. Embodiments are disclosed in the dependent claims. The present disclosure according to an aspect relates to a controller including a casing provided with an upper surface, a lower surface, and side surfaces, and configured to be held by a hand; and an operation part that is provided at least on the upper surface of the casing, wherein a main sounding part is provided on the upper surface of the casing, a sub sounding part is provided on at least either of the side surfaces or the lower surface of the casing, and an angle formed by a sound emission centerline of the main sounding part and the sound emission centerline of the sub sounding part is 90 degrees or more.

In an embodiment of the controller of the present disclosure, the sub sounding part is provided on the lower surface of the casing, and the angle formed by the sound emission centerline of the main sounding part and the sound emission centerline of the sub sounding part toward a direction of the operator is preferably less than 180 degrees.

In an embodiment of the controller of the present disclosure, a sound signal subjected to spatial effect processing is preferably transmitted to the sub sounding part.

For example, the spatial effect processing is delay processing. According to a further embodiment, the spatial effect processing is reverb processing.
FIG. 1 is a perspective view of a controller of a first embodiment of the present disclosure as seen from an upper surface side;
FIG. 2 is a perspective view of the controller of the first embodiment of the present disclosure as seen from a lower-surface side;
FIG. 3 is a cross-sectional view of the controller as illustrated in FIG. 1 taken along a line III-III;
FIG. 4 is a cross-sectional view of the controller as illustrated in FIG. 1 taken along a line IV-IV;
FIG. 5 is a cross-sectional view of the controller according to a second embodiment of the present disclosure as viewed from the same direction as that of the cross-sectional view illustrated in FIG. 4; and
FIG. 6 is a circuit block diagram illustrating an example of an acoustic circuit provided in the controller according to the present disclosure.

In all of the controllers described in the above-mentioned patent documents, since the two loudspeakers are provided only on an upper surface of the controller, there is no difference in a spatial coefficient of the sound delivered to the ears of an operator from the two loudspeakers making it difficult to convey a sense of soundstage or three-dimensional audio depth to the operator. The controller described in JP 2004-128669 A adopts a stereo dipole method to reproduce the three-dimensional audio depth with two loudspeakers which are provided close to each other. However, it is difficult to produce the three-dimensional audio depth with two loudspeakers which are provided very close to each other in a small apparatus such as the controller, and a digital filter which is combined in a complex manner is also required, which results in an expensive acoustic device.

The present disclosure is to address the above-mentioned existing issues, and to provide a controller which can achieve three-dimensional audio depth with a plurality of sounding parts provided in a small casing.

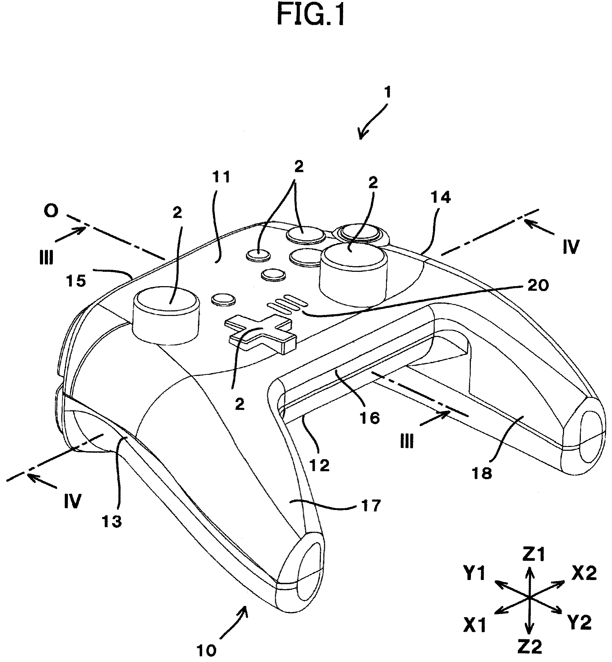

In a controller 1 according to a first embodiment of the present disclosure as illustrated in FIGS. 1 to 4, a Z1-Z2 direction is a vertical direction along a gravity direction, and a Z1-direction is an upward direction and a Z2-direction is a downward direction. A Y1-Y2 direction is a front-rear direction as seen from an operator and is orthogonal to the Z1-Z2 direction. A Y1-direction is a forward direction and a Y2-direction is a backward direction. An X1-X2 direction is a left-right direction as seen from the operator, and is orthogonal to the Z1-Z2 direction and the Y1-Y2 direction. An X1-direction is a leftward direction, and an X2-direction is a rightward direction.

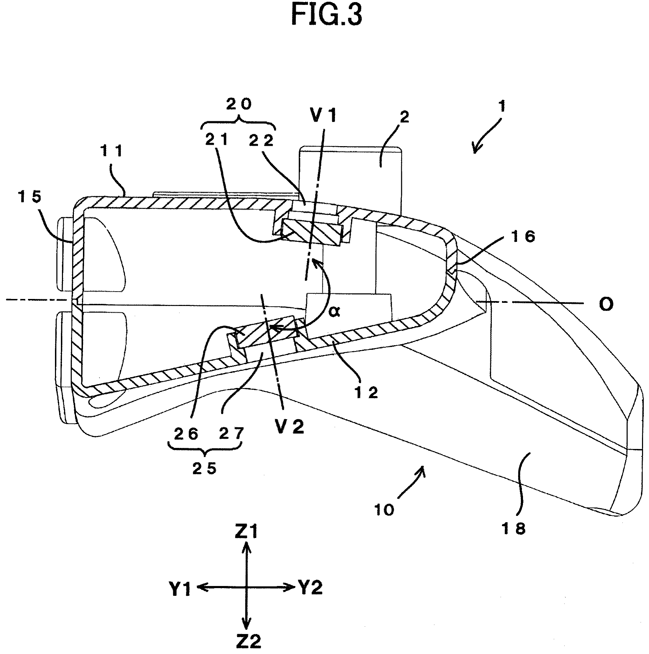

FIGS. 1 to 4 illustrate a center line O extending in the front-rear direction (Y1-Y2 direction) with respect to the controller 1. As illustrated in FIG. 3, the center line O is parallel to an upper surface 11 of a casing 10. The controller 1 is used for operating a video game, virtual reality (VR), or the like and the operator may operate the controller 1 while the controller 1 is in a horizontal posture in which the center line O is directed in the Y1-Y2 direction, or in a lifting posture in which the front of the center line O is slightly inclined upward with respect to the Y1-Y2 direction.

The controller 1 includes the casing 10. The casing 10 includes the upper surface 11 directed upward (Z1-direction) and a lower surface 12 directed downward (Z2-direction). The casing 10 includes a left surface 13 facing the left (X1-direction) and a right surface 14 facing the right (X2-direction). Furthermore, the casing 10 includes a front surface 15 facing forward (Y1-direction) and a rear surface 16 facing backward (Y2-direction). The casing 10 includes a left holding portion 17 extending backward from a left portion of the rear surface 16 and a right holding portion 18 extending backward from a right portion of the rear surface 16. As illustrated in FIG. 1, various operation members 2 are arranged on the upper surface 11 of the casing 10. An operating mechanism operated by the operation members 2 is arranged inside the casing 10.

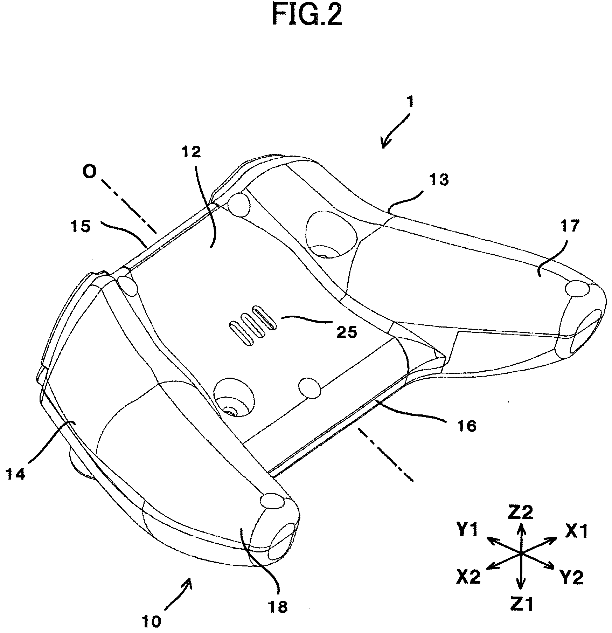

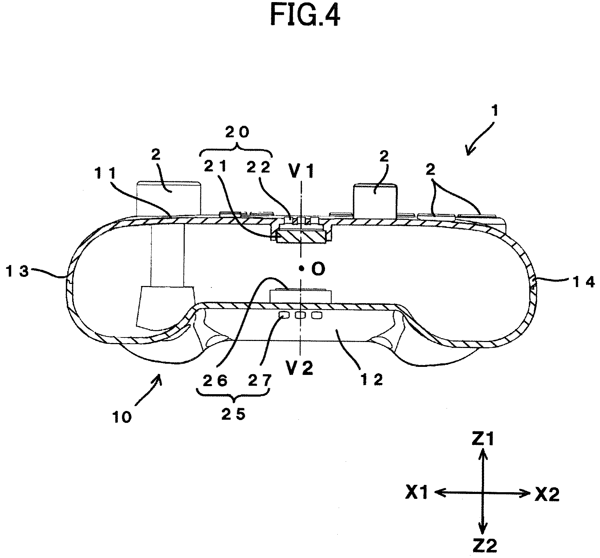

As illustrated in FIG. 1, a main sounding part 20 is provided on the upper surface 11 of the casing 10. As illustrated in FIGS. 3 and 4, the main sounding part 20 includes a compact loudspeaker unit 21 fixed inside the upper surface 11 of the casing 10 and sound holes 22 formed on the upper surface 11 of the casing 10. As illustrated in FIG. 2, a sub sounding part 25 is provided on the lower surface 12 of the casing 10. As illustrated in FIGS. 3 and 4, the sub sounding part 25 includes a compact loudspeaker unit 26 fixed inside the lower surface 12 of the casing 10 and sound holes 27 formed on the lower surface 12 of the casing 10. FIGS. 3 and 4 illustrate a sound emission centerline V1 of the main sounding part 20 and a sound emission centerline V2 of the sub sounding part 25. The sound emission centerline V1 is an imaginary line that passes through the center of a diaphragm provided in the loudspeaker unit 21 and extends along a vibration direction of the diaphragm. The sound emission centerline V2 is an imaginary line that passes through the center of the diaphragm provided in the loudspeaker unit 26 and extends along the vibration direction of the diaphragm.

FIG. 4 is a cross-sectional view of the controller 1 taken along a plane perpendicular to the center line O (an X-Z plane when the upper surface 11 is in a horizontal posture). In the cross-sectional view, the angle formed by the sound emission centerline V1 of the main sounding part 20 and the sound emission centerline V2 of the sub sounding part 25 is 180 degrees. When viewed in the cross-sectional view of FIG. 4, both the sound emission centerline V1 and the sound emission centerline V2 are orthogonal to the center line O. The sound emission centerline V1 extends perpendicularly to the upper surface 11 of the casing 10. FIG. 3 is a cross-sectional view of the controller 1 taken along a plane perpendicular to the upper surface 11 including the center line O (Y-Z plane). In the cross-sectional view, an angle α formed by the sound emission centerline V1 of the main sounding part 20 and the sound emission centerline V2 of the sub sounding part 25 is less than 180 degrees (90 degrees or more) toward the operator (toward the rear).

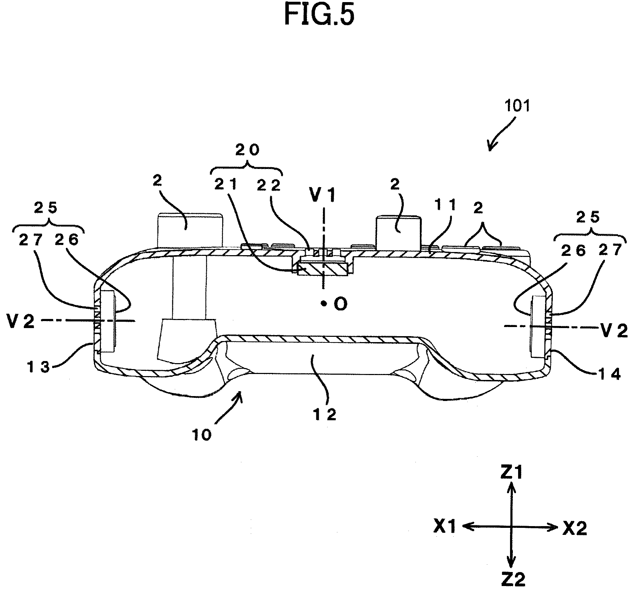

FIG. 5 illustrates a controller 101 according to a second embodiment of the present disclosure. In the controller 101, the main sounding part 20 is provided on the upper surface 11 of the casing 10, and the sub sounding parts 25 are provided on the left surface 13 and the right surface 14, respectively. Similar to the first embodiment as illustrated in FIG. 4, also in FIG. 5, the sound emission centerline V1 of the main sounding part 20 is orthogonal to the center line O and extends perpendicularly to the upper surface 11 of the casing 10. In the cross-sectional view of FIG. 5, the angle formed by the sound emission centerline V1 of the main sounding part 20 and the sound emission centerline V2 of each sub sounding part 25 is 90 degrees.

As illustrated in FIGS. 4 and 5, in the controller of the present disclosure, the angle formed by the sound emission centerline V1 of the main sounding part 20 and the sound emission centerline V2 of the sub sounding part 25 is 90 degrees or more and 180 degrees or less in the cross-sectional view taken in the plane that is perpendicular to the center line O.

The acoustic effect of the controllers 1 and 101 of the above embodiments will be described in the following. The controllers 1 and 101 of the embodiments of the present disclosure are used for an operation of a video game or VR by holding the left holding portion 17 of the casing 10 with the left hand and holding the right holding portion 18 with the right hand. When various operation members 2 provided in the casing 10 are operated during the operation, sound effects corresponding to the operation are emitted from the main sounding part 20 and the sub sounding part 25. The sound effects are, for example, shooting sounds of a shooting game, voices and footsteps of game characters, engine sounds of vehicles and aircraft in the game, and other sound effects. In VR, the sound effects are environmental sounds, operation sounds of machines, etc.

In the controller 1 of the first embodiment as illustrated in FIGS. 1 to 4, since the main sounding part 20 is provided on the upper surface 11 of the casing 10, the sound emitted from the main sounding part 20 reaches the ears of the operator in the shortest time. In contrast to this, since the sub sounding part 25 is provided on the lower surface 12 of the casing 10, the sound emitted from the sub sounding part 25 travels around the outer surface of the casing 10 and reaches the ears of the operator slightly later than the sound emitted from the main sounding part 20. Even when the main sounding part 20 and the sub sounding part 25 emit a sound based on the same voice signal, the sound emitted from the main sounding part 20 and the sound emitted from the sub sounding part 25 have a difference in an acoustic transfer function, such that the operator can hear the sound as a sound conveying the sense of soundstage.

As illustrated in FIG. 4, in the controller 1 of the first embodiment, the sound emission centerline V1 of the main sounding part 20 and the sound emission centerline V2 of the sub sounding part 25 are orthogonal to the center line O that extends in the front-rear direction and face each other in a relationship of 180 degrees vertically. Since the sound emission centerlines V1 and V2 intersect with the center line O, the sound emitted from the main sounding part 20 and the sound emitted from the sub sounding part 25 pass through the space symmetrically and are directed toward the operator. As illustrated in FIG. 3, the sound emission centerline V1 and the sound emission centerline V2 have the angle α slightly smaller than 180 degrees and both sound emission centerlines V1 and V2 are directed to the operator. Therefore, even when the controller 1 is operated with the front of the casing 10 facing upward, the sound emitted from the sub sounding part 25 travels around the outer surface of the rear surface 16 of the casing 10 and is delivered to the ears of the operator with a delay as compared with the sound delivered from the main sounding part 20. The sound emitted from the main sounding part 20 and the sound emitted from the sub sounding part 25 are delivered to the ears of the operator in a balanced manner with respect to the left and right sides while generating an appropriate difference in the acoustic transfer function.

In the controller 101 of second embodiment as illustrated in FIG. 5, the sound emission centerline V1 of the main sounding part 20 is directed upward, and the sound emission centerlines V2 of the two sub sounding parts 25 provided on the left surface 13 and the right surface 14 of the casing 10, respectively, are symmetrically directed in the left and right directions. The sound emitted from the main sounding part 20 reaches the ears of the operator in the shortest time, the sounds emitted from the two sub sounding parts 25 are symmetrically emitted, and the sounds emitted from the two sub sounding parts 25 reach the ears of the operator with a delay as compared with the sound delivered from the main sounding part 20. Therefore, even when the sound based on the same sound signal is emitted from both the main sounding part 20 and the sub sounding part 25, a three-dimensional sound field with enhanced left-right spatial spread can still be achieved.

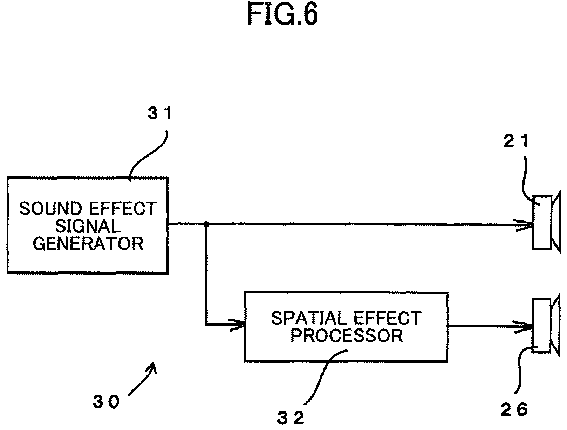

FIG. 6 illustrates a further preferable acoustic circuit 30 of the present disclosure. In the acoustic circuit 30, the sound signal generated by a sound effect signal generator 31 is transmitted to the loudspeaker unit 21 of the main sounding part 20. The same sound signal as that generated by the sound effect signal generator 31 and transmitted to the main sounding part 20 is subjected to spatial effect processing by a spatial effect processor 32 and is transmitted to the loudspeaker unit 26 of the sub sounding part 25. The spatial effect processing in the spatial effect processor 32 is any one of delay processing, reverb processing, compression processing, or equalization processing, or a combination of two or more of these.

When the acoustic circuit 30 as illustrated in FIG. 6 is used, a sound effect is delivered to the ears of the operator from the main sounding part 20, as well as the same sound effect but subjected to spatial processing is delivered to the ears of the operator from the sub sounding part 25, such that an acoustic effect with a wider spatial spread can be obtained.

In the present disclosure, the sub sounding part 25 may be provided on all of the lower surface 12, the right surface 13, and the left surface 14 of the casing 10.

In the controller of the present disclosure, the main sounding part is provided on the upper surface of the casing, the sub sounding part is provided on the side surface or the lower surface of the casing, and the angle formed by the sound emission centerline of the main sounding part and the sound emission centerline of the sub sounding part is 90 degrees or more. Since the sound delivered to the ears of the operator from the sub sounding part is delayed as compared with the sound delivered to the ears of the operator from the main sounding part, the sound as a whole can be heard by the operator with the sense of soundstage.

## Claims

1. A controller, comprising:
a casing provided with an upper surface, a lower surface, and side surfaces, and configured to be held by a hand; and
an operation part that is provided at least on the upper surface of the casing, wherein
a main sounding part is provided on the upper surface of the casing,
a sub sounding part is provided on at least either of the side surfaces or the lower surface of the casing, and
an angle formed by a sound emission centerline of the main sounding part and the sound emission centerline of the sub sounding part is 90 degrees or more.

2. The controller according to claim 1, wherein
the sub sounding part is provided on the lower surface of the casing, and
the angle formed by the sound emission centerline of the main sounding part and the sound emission centerline of the sub sounding part toward a direction of an operator is less than 180 degrees.

3. The controller according to claim 1 or 2, wherein
a sound signal subjected to spatial effect processing is transmitted to the sub sounding part.

4. The controller according to claim 3, wherein
the spatial effect processing is delay processing.

5. The controller according to claim 3 or 4, wherein
the spatial effect processing is reverb processing.
